# EUROPÄISCHE PATENTSCHRIFT

(11) **EP 2 074 879 B1**
(45) Veröffentlichungstag und Bekanntmachung des Hinweises auf die Patenterteilung: **17.06.2015**
(21) Anmeldenummer: 08165258.8
(22) Anmeldetag: 26.09.2008
(51) Int. Cl.: A01B 51/02, A01C 7/20

(54) **Selbstfahrendes Trägerfahrzeug**
Self-propelled carrying vehicle
Engin porteur automoteur

(30) Priorität: 20.12.2007 DE 102007062433
(43) Veröffentlichungstag der Anmeldung: 01.07.2009
(73) Patentinhaber: CLAAS Selbstfahrende Erntemaschinen GmbH, 33428 Harsewinkel (DE)
(72) Erfinder: Claas, Helmut, Dr., 33428 Harsewinkel (DE); Freye, Theo, Dr., 33428 Harsewinkel (DE)

(56) Entgegenhaltungen:
- DE-A1- 3 644 767
- FR-A- 1 106 872
- FR-A- 2 850 526
- US-A- 5 413 055
- US-A- 5 535 688

## Beschreibung

Die Erfindung betrifft ein selbstfahrendes Trägerfahrzeug mit diesem zugeordneter Einrichtung zum Ausbringen von rieselfähigem oder flüssigem Material für landwirtschaftliche Zwecke, insbesondere eine selbstfahrende Sämaschine nach dem Oberbegriff des Anspruchs 1.

Aus dem deutschen Gebrauchsmuster DE 203 06 483 ist ein alternativer Sämaschinenanbau bekannt geworden, bei dem die Säeinheiten an einem Trägerbalken angeordnet sind, der frontseitig von einem als Schlepper ausgeführten selbstfahrenden Trägerfahrzeug aufgenommen wird. In der Arbeitsposition werden die Säeinheiten von dem Schlepper über das zu bearbeitende Territorium geschoben, sodass stets zunächst das Saatgut ausgebracht wird, bevor der Schlepper schließlich das bereitete Saatbett überfährt. Der die Säeinheiten aufnehmende Trägerbalken ist dreiteilig ausgeführt, wobei sich die dem Schlepper frontseitig zugeordnete Säeinheit nahezu senkrecht zur Fahrtrichtung des Schleppers erstreckt, während die dieser mittleren Säeinheit rechts- und linksseitig zugeordneten Säeinheiten unter einem Winkel von 30-45° zur Fahrtrichtung des Schleppers schräggestellt positioniert sind. Eine nach der DE 203 06 483 ausgeführte selbstfahrende Sämaschine hat einerseits den Vorteil, dass der Fahrzeugführer sich zur Beobachtung des Aussaatprozesses nicht mehr entgegen der Fahrtrichtung umdrehen muss, um die Säeinheiten beobachten zu können. Wegen der v-fömigen Anordnung der seitlichen Säeinheiten hat eine derartige Struktur einer selbstfahrenden Sämaschine eine Reihe von Nachteilen, sodass sich geschoben geführte Säeinheiten im Vergleich zu gezogenen Säeinheiten bisher nicht durchsetzen konnten. Ein wesentlicher Nachteil wird durch die V-förmige Anordnung der Säeinheiten bedingt, denn der Maschinenbetreiber muss zur Beobachtung der seitlichen Säeinheiten weiterhin ständig Kopfbewegungen nach rechts und links ausführen, um die gesamte Säelnheitenanordnung visuell überwachen zu können. Diese hohe physische Beanspruchung führt zu einer schnellen Ermüdung und damit zu einem erheblichen Nachlassen der Konzentration des Fahrers, Damit alle Säeinheiten vom Fahrer der Maschine eingesehen werden können, ohne dass dieser sich umdrehen muss, ist die Lange der schräg angeordneten Säeinheiten begrenzt, sodass schließlich nur geringe Arbeitsbreiten realisierbar sind. Ein weiterer Nachteil einer V-förmlgen Anordnung der geschobenen Säeinheiten ergibt sich unmittelbar aus der schrägen Anordnung der seitlichen Mäheinheiten. Damit bei der Aussaat stets ein konstanter Abstand zwischen den Saatreihen sichergestellt wird, müssen die Säschare der seitlichen Säeinheiten einen größeren Abstand zueinander aufweisen, als die Säschare der mittig, nahezu senkrecht zur Fahrtrichtung angeordneten Säeinhelt. Damit erhöht sich der Konstruktions- und Fertigungsaufwand für derartig strukturierte Sämaschinen, was letztlich zu höheren Kosten führt.

Aus der DE 36 44 767 ist zudem ein Aussaatverfahren bekannt geworden, bei dem unmittelbar während der Getreideernte zugleich die Aussaat vorgenommen wird. Hierfür sind dem rückwärtigen Bereich des Getreideschneidwerks des Mähdreschers unmittelbar Säeinheiten zugeordnet, die wiederum die Aussaat abgeschlossen haben, bevor das Fahrwerk des Mähdreschers das bearbeitete Territorium überfährt. Während auch bei einer solchen Ausgestaltung der Erfindung die Säelnhalten schiebend von dem Mähdrescher geführt werden, ist eine Beobachtung der Säeinheiten durch den Maschinenführer nicht möglich, da die Säelnheiten aus Gründen des beschränkt zur Verfügung stehenden Bauraumes zumindest teilweise unterhalb der Fahrerkabine angeordnet sind. Zudem ist der Fahrzeugführer während der Getreideernte nahezu ausschließlich mit der Beobachtung des Schneidwerkes beschäftigt, sodass hier eine optimale Beobachtung des Aussaatvorganges nicht möglich ist.

Aus dem Stand der Technik sind zudem gemäß der FR-A-2850526, EP-A-0251053 und US-A-3,720,047 selbstfahrende landwirtschaftliche Arbeitsmaschinen zum Ausbringen von rieselfähigem Saatgut bekannt geworden, die In einer aufgelösten Bauweise front- und heckseitig an dem Trägerfahrzeug adaptierte Sä- und Bodenbearbeitungsaggregate umfassen. Derartige Systeme haben jedoch den Nachteil, dass die front- und heckseitig am Trägerfahrzeug adaptierten Arbeltsaggregate vom Bediener der Maschine während des Feldeinsatzes nur unzureichend beobachtbar sind, da der Bediener nie gleichzeitig den rückwärtigen und den frontseitigen Bereich der landwirtschaftlichen Arbeitsmaschine beobachten kann. Zudem haben derartige Fahrzeugkonzepte bei Straßentransport den Nachteil, dass sie weit ausladend am Trägerfahrzeug positioniert sind, was neben hohen Achslasten auch zu einem Aufschaukeln des Fahrzeugs beim Abbremsen aus hohen Fahrgeschwindigkeiten führt.

Es ist deshalb Aufgabe der Erfindung, die beschriebenen Nachteile des Standes der Technik zu vermelden und Insbesondere eine selbstfahrende Sämaschine vorzuschlagen, die kostengünstig herstellbar, einfach handhabbar und bei der der Aussaatprozess gut beobachtbar ist.

Diese Aufgabe wird erfindungsgemäß durch die kennzeichnenden Merkmale des Anspruchs 1 gelöst.

Indem die eine oder mehreren Säeinheiten der Sämaschine In der Arbeitsposition nahezu senkrecht zur Fahrtrichtung des Trägerfahrzeugs ausgerichtet sind, wird sichergestellt, dass die Sämaschine kostengünstig herstellbar, da die Säeinheiten wegen ihrer nahezu senkrechte Anordnung identisch ausgeführt sein können. Zudem kann der Aussaatprozess durch den Fahrer besser beobachtet werden, da nunmehr alle Säeinheiten im Sichtbereich des Fahrers liegen.

In einer vorteilhaften Ausgestaltung der Erfindung können die eine oder mehreren Säelnheiten von einer Nichtarbeitsposition In eine Arbeitsposition und umgekehrt verschwenkt werden. Damit wird sichergestellt, dass die Sämaschine große Arbeitsbreiten realisieren kann und dennoch in der Transportposition die zulässigen Straßentransportbreiten nicht überschreitet.

Eine konstruktiv einfache Umsetzung einer geschobenen Sämaschine mit großer Arbeitsbreite ergibt sich In einer vorteilhaften Weiterbildung der Erfindung dann, wenn die Sämaschine eine Vielzahl von Säeinheiten umfasst und die Säeinhelten zumindest in der Arbeitsposition unmittelbar oder über zumindest eine Tragrahmenstruktur miteinander gekoppelt sind.

Eine konstruktiv einfache Umsetzung, insbesondere ein kompakte Struktur einer geschobenen Sämaschine wird in einer vorteilhaften Ausgestaltung der Erfindung auch dann erreicht, wenn die eine oder eine Vielzahl von Saeinheiten umfassende Sämaschine über eine Tragrahmenstruktur an dem Trägerfahrzeug adaptiert ist und die Tragrahmenstruktur die Sämaschine in der Weise aufnimmt, dass die Sämaschine von der Tragrahmenstruktur schiebend bewegt wird.

In einer weiteren vorteilhaften Ausgestaltung der Erfindung ist die eine oder eine Vielzahl von Säeinheiten umfassende Sämaschine über eine Tragrahmenstruktur an dem Trägerfahrzeug in der Welse adaptiert, dass die Tragrahmenstruktur die Sämaschine über das zu bearbeitende Territorium zieht. Eine solche Ausgestaltung hat insbesondere den Vorteil, dass die Sämaschine so über das zu bearbeitende Territorium geführt werden kann, dass sie bei Kollision mit Hindernissen in einen der Fahrtrichtung entgegengesetzten Bereich kollisionsfrei ausweichen kann. Zudem hat eine derartige Aufhängung der Sämaschine den Vorteil, dass sich die Sämaschine während des Arbeitsbetriebes nicht in den Boden eingräbt.

In einer vorteilhaften Weiterbildung der Erfindung ist vorgesehen, dass die eine oder mehreren Säeinheiten der Sämaschine beim Wenden und/oder Rückwärtsfahren und/oder beim Transport des Trägerfahrzeugs in eine Zwischenposition angehoben werden, sodass die Säschare der Säeinheiten außer Eingriff gelangen.

Eine kompakte und einfach handhabbare Struktur einer selbstfahrenden Sämaschine wird auch dadurch noch unterstützt, dass dem Trägerfahrzeug ein Vorratsbehälter zugeordnet ist und der Vorratsbehälter unmittelbar von dem Tragrahmen des Trägerfahrzeugs oder einem dem Trägerfahrzeug zugeordneten Hubwerk aufgenommen oder von dem Trägerfahrzeug gezogen wird.

Damit die selbstfahrende Sämaschine über Ihre Laufräder annähernd gleichverteilt Lasten auf dem Boden abstützt, die Manövrierfähigkeit auch unter schwierigen Bedingungen erhalten bleibt und die von der Tragrahmenstruktur des Trägerfahrzeuges zu übertragenden Kräfte beherrschbar bleiben Ist in einer vorteilhaften Weiterbildung der Erfindung vorgesehen, dass die Sämaschine in der Arbeitsposition und in der Transportposition eine ausbalancierte Struktur aufweist. Dem Rechnung tragend ist in einer ersten vorteilhaften Ausgestaltungsvariante vorgesehen, dass die ausbalancierte Struktur dadurch bewirkt wird, dass das Trägerfahrzeug zumindest zwei Fahrzeugachsen aufweist und die ein oder mehreren Säeinheiten In Arbeits- und Transportposition im wesentlichen im Bereich der einen Fahrzeugachse und die zumindest den Antriebsmotor und das Hauptgetriebe umfassende Antriebsorgane des Trägerfahrzeuges und der Vorratsbehälter Im wesentlichen im Bereich der zumindest einen weiteren Fahrzeugachse an dem Trägerfahrzeug angeordnet sind.

In einer anderen Ausgestaltungsvariante wird diese ausbalancierte Struktur der selbstfahrenden Sämaschine dadurch erreicht, dass das Trägerfahrzeug zumindest zwei Fahrzeugachsen aufweist und die ein oder mehreren Säelnheiten in Arbeits- und Transportposition im wesentlichen im Bereich der einen Fahrzeugachse und die Antriebsorgane des Trägerfahrzeuges und der Vorratsbehälter im wesentlichen im Bereich der zumindest einen weiteren Fahrzeugachse an dem Trägerfahrzeug angeordnet sind und wobei dem Trägerfahrzeug eine verschwenkbare Fahrerkabine zugeordnet ist, die in der Arbeitsposition im wesentlichen im Bereich der einen Fahrzeugachse und in der Transportposition im wesentlichen im Bereich der weiteren Fahrzeugachse positioniert ist.

Eine extrem kompakte Bauweise der selbstfahrenden Sämaschine ergibt sich bei Systemen mit verschwenkbarer Fahrerkabine dann, wenn in einer vorteilhaften Weiterbildung der Erfindung in der Transportposition die eine oder mehreren Säeinheiten den Bereich der Fahrerkabine in Arbeitsposition zumindest teilweise ausfüllen. Eine derartige Anordnung hat insbesondere den Vorteil, dass die Säeinheiten nahe der Tragrahmenstruktur des Trägerfahrzeugs und der einen Fahrachse positioniert werden können, sodass die Torsions- und Biegebeanspruchungen der verschiedenen Tragrahmenstrukturen beherrschbar bleiben. Eine optimal ausbalancierte Struktur der selbstfahrenden Sämaschinen ergibt sich in diesem Zusammenhang auch dann, wenn In einer weiteren vorteilhaften Ausgestaltung der Erfindung in der Transportposition die Fahrerkabine zumindest teilweise den Bereich des Transportbehälters In Arbeitsposition ausfüllt.

Aufgrund dessen, dass die Laufräder des Trägerfahrzeugs das bereits bereitete Saatbett überrollen ist es von großer Bedeutung, dass deren bodenverdichtende Wirkung in einem Bereich liegt, der das Andrucken der Aussaat begünstigt aber nicht so hoch ist, dass die auftretende Verdichtung des Bodens das Auflaufen der Saat behindert. Deshalb wird in einer vorteilhaften Ausgestaltung der Erfindung vorgeschlagen, dass die den Fahrzeugachsen des Trägerfahrzeugs zugeordneten Laufräder lenkbar und in einer Hundegangfunktion betreibbar sind und das Trägerfahrzeug in der Arbeitsposition in der Hundegangfunktion betrieben wird.

Eine effiziente Form der Saatbettbereitung und Aussaat wird dann erreicht, wenn in einer vorteilhaften Ausgestaltung der Erfindung dem Trägerfahrzeug im rückwärtigen Bereich Bodenbearbeitungs- und/oder Saatbettbereitungseinheiten zugeordnet sind und die Arbeitsbereiche der dem Trägerfahrzeug vorauslaufenden Säeinheiten und der nachlaufenden Bodenbearbeitungs- und/oder Saatbettbereitungseinheiten nahezu bündig aneinander grenzen.

Da zunehmend landwirtschaftliche Flächen mit sogenannten Fahrgassen versehen werden, In welche alle an dem Pflanzenproduktionsprozess beteiligten landwirtschaftlichen Maschinen auf dem zu bearbeitenden Territorium fahren müssen, ist in einer weiteren vorteilhaften Ausgestaltung der Erfindung vorgesehen, das Trägerfahrzeug in Arbeitsposition so betrieben wird, dass jeweils die einer Fahrzeugseite zugeordneten Laufräder in derselben Fahrspur laufen, wobei die Fahrspuren dann zugleich die Fahrgassen für später das zu bearbeitende Territorium überfahrende Maschinen bilden.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: das erfindungsgemäße Trägerfahrzeug In der Draufsicht
- Figur 2: eine Seitenansicht einer ersten Ausgestaltungsvariante des erfindungsgemäßen Trägerfahrzeugs
- Figur 3: eine weitere Ausgestaltungsvariante des erfindungsgemäßen Trägerfahrzeugs In der Seitenansicht
- Figur 4: schematische Darstellungen weiterer Ausgestaltungsvariante des erfindungsgemäßen Trägerfahrzeugs in der Draufsicht

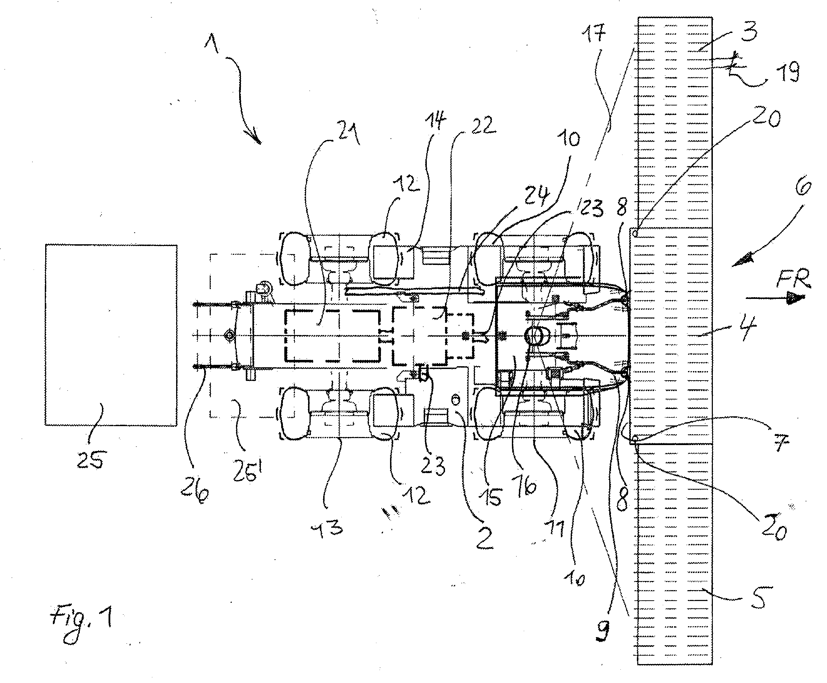

Fig. 1 zeigt eine selbstfahrende Sämaschine 1, bestehend aus einem Trägerfahrzeug 2 und einem dem Trägerfahrzeug 2 frontseitig zugeordneten, die Säeinheiten 3-5 aufnehmenden Adapter 6. Der Adapter 6 umfasst eine, in Figur 1 schematisch dargestellte Tragrahmenstruktur 7, die in ihrem rückwärtigen, dem Trägerfahrzeug 2 zugeordneten Bereich Anlenkpunkte 8 aufnimmt, über die der Adapter 6 und damit die Säeinheiten 3-5 an einem dem Trägerfahrzeug 2 frontseitig zugeordneten Hubwerk 9 höhen- und/oder seitenverschwenkbar zugeordnet sind. Das Trägerfahrzeug 2 verfügt zudem über eine Laufräder 10 aufnehmende Vorderachse 11 und eine ebenfalls Laufräder 12 aufnehmende Hinterachse 13. Im Bereich der Vorderachse 11 ist der Tragrahmenstruktur 14 des Trägerfahrzeugs 2 zudem eine Fahrerkabine 15 zugeordnet, in der der Betreiber 16 der selbstfahrenden Sämaschine 1 so positioniert Ist, dass er in Fahrtrichtung FR blickend in seinem Sichtfeld 17 die Säeinheiten 3-5 des Adapters 6 einsehen kann. Damit dies auf einfache Weise möglich wird, sind die Säeinheiten 3-5 des Adapters 6 erfindungsgemäß nahezu senkrecht zur Fahrtrichtung FR der selbstfahrenden Sämaschine 1 an dem Trägerfahrzeug 2 angeordnet. Dies hat zugleich den Vorteil, dass die Säschare 18 aller Säeinheiten 3-5 zueinander stets den gleichen Abstand 19 aufweisen. Damit die Säeinheiten 3-5 zugleich von einer breiten Arbeitsposition gemäß Figur 1 in eine noch näher zu beschreibende Nichtarbeitsposition verschwenkt werden können, sind die jeweils benachbarten Säeinheiten 3-5 über Gelenkverbindungen 20 entweder unmittelbar miteinander oder über die Tragrahmenstruktur 7 des Adapters 6 schwenkbeweglich miteinander verbunden.

Im Bereich der Hinterachse 13 sind der Tragrahmenstruktur 14 des Trägerfahrzeugs 2 schließlich der Antriebsmotor 21 und ein mit dem Antriebsmotor 21 gekoppeltes Hautgetriebe 22 zugeordnet, wobei das Hauptgetriebe 22 so in einen Antriebsstrang 23 integriert ist, dass entweder alle oder nur eine Fahrzeugachse 11, 13 und die verschiedenen Verbraucher, wie etwa die Säeinheiten 3-5 und an sich bekannte und hier nicht näher beschriebene, in der Regel pneumatisch betriebene Saatgutfördereinrichtungen 24 angetrieben werden können. Zugleich ist im Bereich der Hinterachse 13 der Vorratsbehälter 25, 25' angeordnet, wobei dieser entweder als von dem Trägerfahrzeug 2 gezogener Vorratsbehälter 25 oder getragener Vorratsbehälter 25' ausgeführt sein kann. Die getragene Ausführung des Vorratsbehälters 25' kann entweder dadurch erreicht werden, dass der Vorratsbehälter 25' unmittelbar von der Tragrahmenstruktur 14 des Trägerfahrzeugs 2 aufgenommen wird oder dem Trägerfahrzeug 2 heckseitig ein Heckhubwerk 26 zugeordnet ist, welches den Vorratsbehälter 25' aufnimmt und über die Hinterachse 13 und/oder die Tragrahmenstruktur 14 des Trägerfahrzeugs 2 abstützt.

Es liegt zudem im Rahmen der Erfindung, dass das Trägerfahrzeug als Schlepper oder als so genanntes Systemfahrzeug ausgebildet ist.

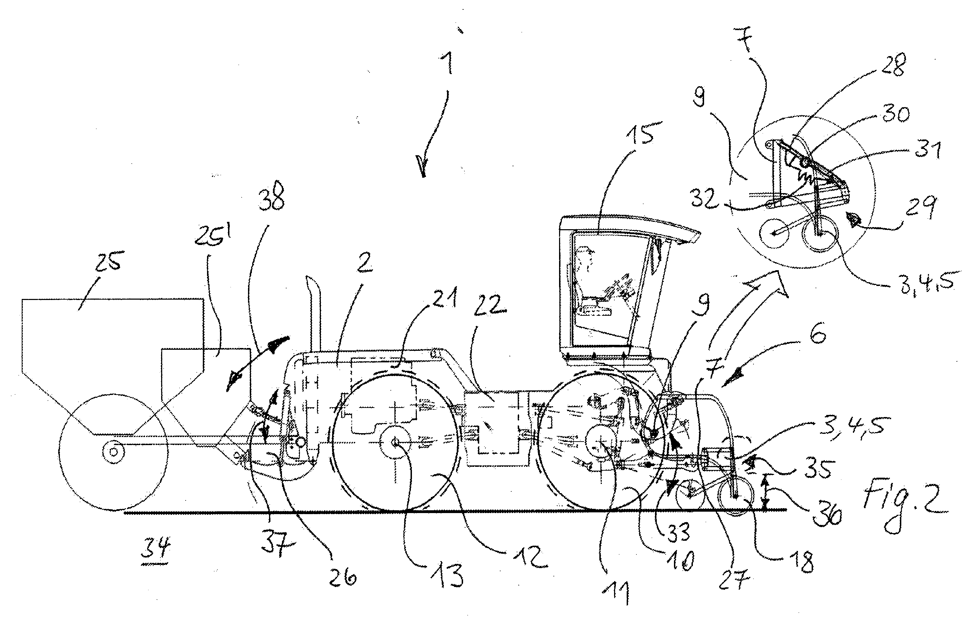

Figur 2 zeigt Ausgestaltungsvarianten der erfindungsgemäßen, selbstfahrenden Sämaschine 1, wobei die Sämaschine 1 aus Vereinfachungsgründen sowohl In der Arbeitsposition als auch der Nichtarbeitsposition dargestellt Ist. In dem dargestellten Ausführungsbeispiel ist das Trägerfahrzeug 2 als so genanntes Systemfahrzeug ausgeführt. In Analogie zu Figur 1 wird in einer ersten Ausgestaltungsvariante die Tragrahmenstruktur 7 des die Säeinheiten 3-5 aufnehmenden Adapters 6 in ihrem rückwärtigen Bereich von dem Hubwerk 9 des Trägerfahrzeugs 2 schwenkbeweglich aufgenommen. In dieser Ausgestaltungsvariante erfolgt die Koppelung der Säeinheiten 3-5 mit besagter Tragrahmenstruktur 7 im rückwärtigen Bereich 27 der Säeinheiten 3-5, sodass die Säeinheiten 3-5 von der Tragrahmenstruktur 7 geschoben werden. Gemäß Detalldarstellung A in Figur 2 kann die Tragrahmenstruktur 7 des Adapters 6 aber auch so beschaffen sein, dass Kragarme 28 die Säeinheiten 3-5 übergreifen und im fronseitigen Bereich 29 der Säeinheiten 3-5 mit diesen gekoppelt sind, sodass die Säeinheiten 3-5 von der Tragrahmenstruktur 7 des Adapters 6 gezogen werden. Indem die Kragarme 28 zudem zweigeteilt ausgeführt sind und ein Schwenkgelenk 30 umfassen, kann der die Säeinheiten 3-5 aufnehmende Abschnitt 31 eines jeden Kragarmes 26 beispielsweise gegen die Wirkung einer zwischen beiden Abschnitten des Kragarms 28 angeordneten Rückstellfeder 32 so geführt werden, dass die Säeinheiten 3-5 bei Kollision mit Hindernissen ausweichen können und nach Passieren des Hindernisses selbsttätig oder durch Fremdbetätigung wieder in ihre Arbeitsposition gelangen.

Indem das die Tragrahmenstruktur 7 des Adapters 6 aufnehmende Hubwerk 9 des Tragerfahrzeugs 2 zumindest gemäß Pfeilrichtung 33 höhenverstellbar ist, kann die selbstfahrende Sämaschine 1 während des Aussaatvorgangs auf dem zu bearbeitenden Territorium 34 in eine Zwischenposition 35 verbracht werden, in der die Säschare 18 einen Abstand 36 zum zu bearbeitenden Territorium 34 einnehmen, sodass die Säschare 18 beispielsweise beim Rückwärtsfahren, beim Wenden oder bei Transportfahrten des Trägerfahrzeugs 2 außer Eingriff gelangen.

Je nach Ausgestaltungsvariante wird, wie bereits beschrieben, der Vorratsbehälter 25, 25' entweder von dem Trägerfahrzeug 25 gezogen oder getragen. Eine besonders vorteilhafte Ausgestaltung ergibt sich dann, wenn dem Trägerfahrzeug 2 ein so genanntes Heckhubwerk 26 zugeordnet ist und der Vorratsbehälter 25' von diesem aufgenommen wird. Indem das Heckhubwerk 26 gemäß Pfeilrichtung 37 verschwenkbar ist, kann auch der Vorratsbehälter 25' gemäß Pfeilrichtung 38 in verschiedene Positionen verschwenkt werden, sodass er zum Befüllen absenkbar und Je nach Befüllzustand während des Aussaatvorganges in verschiedenen Positionen auf dem Trägerfahrzeug 2 im Bereich der Hinterachse 13 anordenbar ist. Dies hat insbesondere den Vorteil, dass die selbstfahrende Sämaschine 1 in der Arbeitsposition eine ausbalancierte Struktur aufweist, die eine gleichmäßige Belastung der Fahrzeugachsen 11, 13 sicherstellt.

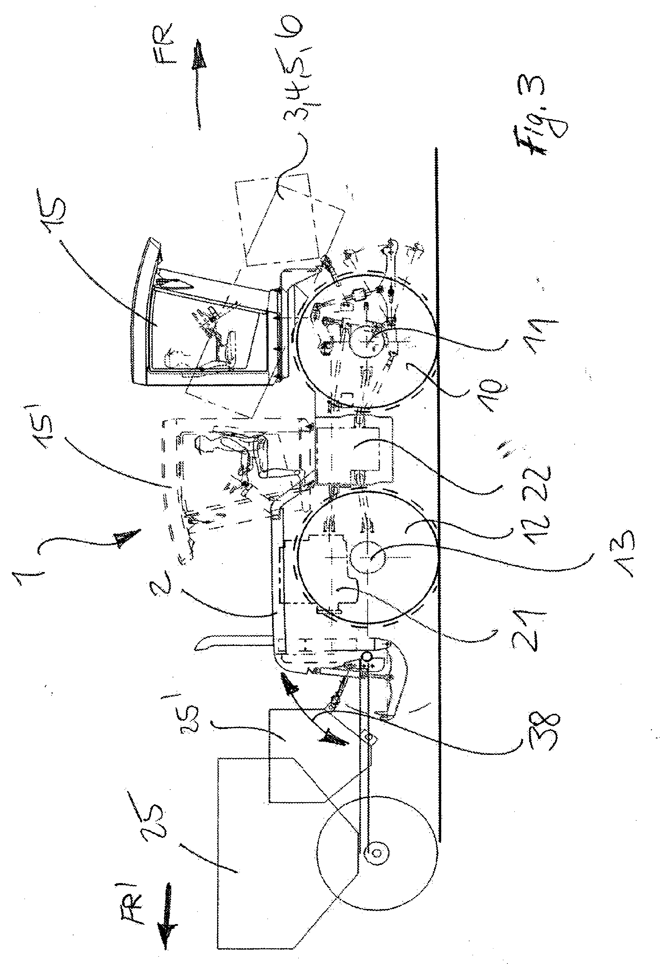

Figur 3 zeigt schematisch, durch welche Maßnahmen eine erfingdungsgemäß ausbalancierte Struktur der selbstfahrenden Sämaschine 1 in der Arbeits- und Nichtarbeitsposition erreicht wird, wobei die durchgezogenen Linien die Arbeitsposition und die strichpunktierten Linien die Nichtarbeitsposition der verschiedenen Elemente darstellen. In der Arbeitsposition sind die Säeinheiten 3-5 und der sie tragende Adapter 6 sowie die Fahrerkabine 15 im Wesentlichen im Bereich der Vorderachse 11 angeordnet. Zugleich nehmen zumindest der Antriebsmotor 21, das Hauptgetriebe 22 und der befüllte Vorratsbehälter 25, 25' eine im Wesentlichen im Bereich der Hinterachse 13 liegende Position ein. In einer ersten Ausgestaltungsvariante werden die links- und rechtsseitigen Säeinheiten 3,5 (siehe Figur 1) In der Nichtarbeitsposition in rechts- und linksseitig neben der Fahrerkabine 15 angeordnete Nichtarbeitspositionen verschwenkt, sodass sie weiterhin om Wesentlichen im Bereich der Vorderachse 11 und oberhalb der von der Vorderachse 11 aufgenommenen Laufräder 10 positioniert sind. Zugleich wird die dem Trägerfahrzeug 2 frontseitig zugeordnete Säeinheit 4 in eine bodenferne Position verschwenkt. Indem die Fahrerkabine 15 und die Säeinheiten 3-5 weiterhin im Wesentlichen im Bereich der Vorderachse 11 und zumindest der Antriebsmotor 21, das Hautgetriebe 22 und der getragene oder gezogene Vorratsbehälter 25, 25' im Bereich der Hinterachse 13 angeordnet sind, bleibt auch in der Transportstellung der Sämaschine 1 deren ausbalancierte Struktur erhalten. Sofern das Trägerfahrzeug 2 über einen mit dem Heckhubwerk 26 gekoppelten Vorratsbehälter 25' verfügt ist es in diesem Zusammenhang auch denkbar, dass der Vorratsbehälter gemäß Pfeilrichtung 38 In eine der Hinterachse 13 nachgeordnete Position verschwenkt wird, um eine optimal ausbalancierte Struktur zu erhalten. Sofern das Trägerfahrzeug 2 als nicht dargestellter Schlepper ausgeführt ist bleiben die beschriebenen Zusammenhänge mit der Ausnahme erhalten, dass die Fahrerkabine 15 in der Regel im Bereich der Hinterachse 13 angeordnet ist.

In einer weiteren Ausgestaltung der Erfindung verfügt das Trägerfahrzeug 2 über eine In ihrer Position auf dem Trägerfahrzeug 2 änderbare Fahrzeugkabine 15, die in der Transportposition in den Bereich der Hinterachse 13 verschwenkt werden kann. In einer bevorzugten Ausgestaltung wird die Fahrerkabine 15 dabei um 180° gedreht, sodass die Fahrerkabine 15' dann in eine, der Fahrtrichtung FR in Arbeitsposition entgegengesetzte Fahrtrichtung FR' weist. Zugleich wird der von dem Heckhubwerk 26 getragene Vorratsbehälter 25' gemäß Pfeilrichtung 38 verschwenkt, sodass die Fahrerkabine 15' zumindest teilweise in dem Bereich positioniert werden kann, in dem in der Arbeitsposition der Vorratsbehälter 25' positioniert war. Indem die Fahrerkabine 15, 15' in dieser Transportposition aus dem Bereich der Vorderachse 11 wegbewegt wurde, können die verschwenkbaren Säeinheiten 3-5 so im Bereich der Vorderachse 11 positioniert werden, dass sie auch den Bereich der Fahrerkabine 15 ausfüllen können. Neben einer extrem kompakten Bauweise der selbstfahrenden Sämaschine 1 wird auch hier eine optimal ausbalancierte Struktur der Sämaschine in der Transportposition sichergestellt.

Sofern das Trägerfahrzeug 2 von einem nicht dargestellten Schlepper gebildet wird, dessen Kabine in der Regel stets im Bereich der Hinterachse 13 angeordnet ist, kann die kompakte Struktur in der Nichtarbeitsposition dann erreicht werden, wenn der Schlepper über eine sogenannte Rückfahreinrichtung verfügt, bei der nur der Fahrersitz In der Fahrerkabine 15 um 180° gedreht wird. Derartige Schlepper fahren in der Arbeitsposition mit gedrehter Fahrerkabine 15', während sie In der Nichtarbeitsposition, beispielsweise bei Straßenfahrt, ihre ursprüngliche Position wieder einnimmt. Zur Umsetzung der erfindungsgemäßen Lehre müssen diese Schlepper dann die erfindungsgemäßen Säeinheiten 3-5 über das Ihnen zugeordnete Heckhubwerk 26 aufnehmen, während der Vorratsbehälter 25' dem Fronthubwerk zugeordnet ist. Da sich bei Schleppern mit Rückfahreinrichtung, je nach Position der Fahrerkabine 15, 15' die Funktion der Fahrachsen zwischen Hinterachs- und Vorderachsfunktion ändern, ergibt sich dann in Analogie zu dem in den Figuren 1 - 4 beschriebenen Ausführungsbeispiel die ausbalancierte Struktur, indem in der Arbeitsposition die Fahrerkabine 15' und die Säeinheiten 3-5 im wesentlichen der in Fahrtrichtung FR vorn liegenden Fahrzeugachse zugeordnet sind, während zumindest der Antriebsmotor 21 und das Hauptgetriebe 22 sowie der Vorratsbehälter 25' im wesentlichen der in Fahrtrichtung nachgeordneten Fahrzeugachse zugeordnet sind. Zugleich behindern die in kompakter Weise in die Transportposition verschwenkten Säeinheiten nicht die Sicht des Schlepperfahrers, da dieser bei Straßentransport in die entgegengesetzte Richtung blickt.

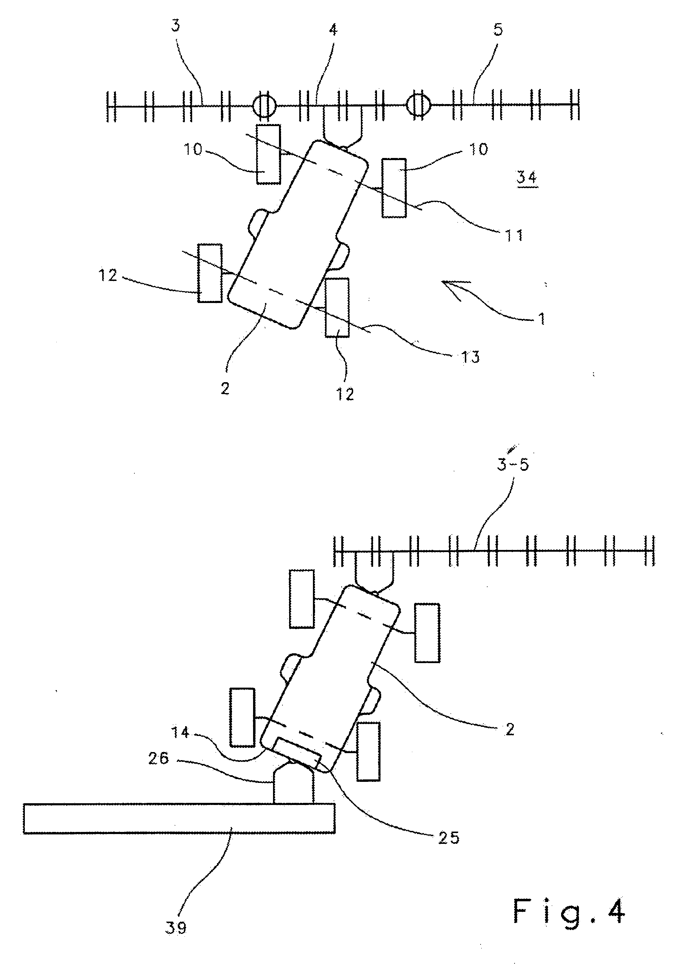

Gemäß der schematischen Darstellung in Figur 4, obere Abbildung, können die den Fahrzeugachsen 11, 13 das Trägerfahrzeugs 2 zugeordneten Laufräder 10, 12 lenkbar und in einer Hundegangfunktion betreibbar sein und wobei das Trägerfahrzeug 2 in der Arbeitsposition in der Hundegangfunktion betrieben wird. Auf diese Weise rollen alle Laufräder 10, 12 in verschiedenen Fahrspuren ab, sodass der bodenverdichtende Einfluss der Laufräder 10, 12 auf das bereits fertiggestellte Saatbett 34 abnimmt. Sofern die von den Laufrädern 10, 12 verursachten Fahrspuren später als sogenannte Fahrgassen benutzt werden sollen, in denen die Laufräder weiterer landwirtschaftlicher Fahrzeuge geführt werden sollen, kann das Trägerfahrzeug 2 auch gemäß Figur 1 so betrieben werden, dass jeweils die einer Fahrzeugseite zugeordneten Laufräder 10, 12 in derselben Fahrspur laufen.

Eine besonders effiziente Saatbettbereltungskombination ergibt sich auch denn, wenn gemäß Figur 4, untere Abbildung, dem Trägerfahrzeug 2 frontseitig die erfindungsgemäßen Säeinheiten 3-5 und heckseitig neben dem von dem Heckhubwerk 26 oder der Tragrahmenstruktur 14 des Trägerfahrzeugs 2 getragenen Vorratsbehälter 25' eine Bodenbearbeitungs- und/oder Saatbettbereitungselnheit 39, etwa ein Pflug oder eine Egge, zugeordnet ist und wobei die Arbeitsbereiche der dem Trägerfahrzeug 2 vorauslaufenden Säeinheiten 3-5 und der nachlaufenden Bodenbearbeitungs- und/oder Saatbettbereitungseinheiten 39 nahezu bündig aneinander grenzen. Eine solche Anordnung hätte insbesondere den Vorteil, dass die hohe Masse des befüllten Vorratsbehälters 25' zugleich über die Bodenbearbeltungs- und/oder Saatbettbereitungseinheit 39 auf dem Boden abgestützt werden kann, sodass neben einer Fahrwerkentlastung am Trägerfahrzeug 2 zugleich wegen der durch den Vorratsbehälter 25' hervorgerufenen zusätzlichen Ballastierung eine größere Laufruhe der Bodenbearbeitungs- und/oder Saatbettbereitungseinheit 39 bewirkt wird.

### Bezugszeichenliste:

- 1: Sämaschine
- 2: Trägerfahrzeug
- 3-5: Säeinheiten
- 6: Adapter
- 7: Tragrahmenstruktur
- 8: Anlenkpunkt
- 9: Hubwerk
- 10: Laufrad

- 11: Vorderachse
- 12: Laufrad
- 13: Hinterachse
- 14: Tragrahmenstruktur
- 15: Fahrerkabine
- 16: Betreiber
- 17: Sichtfeld
- 18: Säschar
- 19: Abstand
- 20: Gelenkverbindung
- 21: Antriebsmotor
- 22: Hauptgetriebe
- 23: Antriebsstrang
- 24: Saatgutfördereinrichtung
- 25,25': Vorratsbehälter
- 26: Heckhubwerk
- 27: Bereich
- 28: Kragarm
- 29: Bereich
- 30: Schwenkgelenk
- 31: Abschnitt

- 32: Rückstellfeder
- 33: Pfeilrichtung
- 34: Territorium
- 35: Zwischenposition
- 36: Abstand
- 37: Pfeilrichtung
- 38: Pfeilrichtung
- 39: Bodenbearbeitungs- und/oder Saatbettbereitungseinheit

- FR: Fahrtrichtung

## Patentansprüche

1. Selbstfahrendes Trägerfahrzeug mit diesem zugeordneter Sämaschine zum Ausbringen von rieselfähigem oder flüssigem Material für landwirtschaftliche Zwecke, wobei die Säeinheiten der Sämaschine dem Trägerfahrzeug in der Arbeitsposition vorauslaufen,
die Sämaschine (1) eine oder mehrere Säeinheiten (3-5) umfasst und
wobei die Säeinheiten (3-5) in der Arbeitsposition nahezu senkrecht zur Fahrtrichtung (FR) des Trägerfahrzeugs (2) ausgerichtet sind **dadurch gekennzeichnet, dass** die Sämaschine (1) in der Arbeitsposition und in der Transportposition eine ausbalancierte Struktur aufweist, wobei die ausbalancierte Struktur dadurch bewirkt wird, dass das Trägerfahrzeug (2) zumindest zwei Fahrzeugachsen (11, 13) aufweist und die eine oder die mehreren Säeinheiten (3-5) in Arbeits- und Transportposition im Wesentlichen im Bereich der einen Fahrzeugachse (11) und zumindest die Antriebsorgane (21, 22) des Trägerfahrzeuges (2) und der Vorratsbehälter (25, 25') Im Wesentlichen im Bereich der zumindest einen weiteren Fahrzeugachse (13) an dem Trägerfahrzeug (2) angeordnet sind und wobei dem Trägerfahrzeug (2) eine verschwenkbare Fahrerkabine (15, 15') zugeordnet ist, die in der Arbeitsposition im Wesentlichen im Bereich der einen Fahrzeugachse (11) und in der Transportposition im Wesentlichen im Bereich der weiteren Fahrzeugachse (13) positioniert ist und in der Transportposition die eine oder die mehreren Säeinheiten (3-5) den Bereich der Fahrerkabine (15) in Arbeitsposition zumindest teilweise ausfüllen.

2. Selbstfahrendes Trägerfahrzeug mit diesem zugeordneter Sämaschine zum Ausbringen von rieselfähigem oder flüssigem Material für landwirtschaftliche Zwecke nach Anspruch 1,
**dadurch gekennzeichnet,**
**dass** die eine oder die mehreren Säeinheiten (3-5) von einer Nichtarbeitsposition in eine Arbeitsposition und umgekehrt bewegbar sind.

3. Selbstfahrendes Trägerfahrzeug mit diesem zugeordneter Sämaschine zum Ausbringen von rieselfähigem oder flüssigem Material für landwirtschaftliche Zwecke nach Anspruch 2,
**dadurch gekennzeichnet,**
**dass** die Sämaschine (1) eine Vielzahl von Säeinheiten (3-5) umfasst und wobei die Säeinheiten (3-5) zumindest in der Arbeitsposition unmittelbar oder über zumindest eine Tragrahmenstruktur (7) miteinander gekoppelt sind.

4. Selbstfahrendes Trägerfahrzeug mit diesem zugeordneter Sämaschine zum Ausbringen von rieselfähigem oder flüssigem Material für landwirtschaftliche Zwecke nach einem der vorhergehenden Ansprüche,
**dadurch gekennzeichnet,**
**dass** die eine oder eine Vielzahl von Säeinheiten (3-5) umfassende Sämaschine (1) über eine Tragrahmenstruktur (7) an dem Trägerfahrzeug (2) adaptiert ist und wobei die Tragrahmenstruktur (7) die Sämaschine (1) in der Welse aufnimmt, dass die Sämaschine (1) von der Tragrahmenstruktur (7) schiebend bewegt wird.

5. Selbstfahrendes Trägerfahrzeug mit diesem zugeordneter Sämaschine zum Ausbringen von rieselfähigem oder flüssigem Material für landwirtschaftliche Zwecke nach einem der Ansprüche 1-3,
**dadurch gekennzeichnet,**
**dass** die eine oder eine Vielzahl von Säeinheiten (3-5) umfassende Sämaschine (1) über eine Tragrahmenstruktur (7) an dem Trägerfahrzeug (2) adaptiert ist und wobei die Tragrahmenstruktur (7) die Sämaschine (1) in der Weise aufnimmt, dass die Sämaschine (1) von der Tragrahmenstruktur (7) gezogen wird.

6. Selbstfahrendes Trägerfahrzeug mit diesem zugeordneter Einrichtung zum Ausbringen von rieselfähigem oder flüssigem Material für landwirtschaftliche Zwecke nach einem der vorhergehenden Ansprüche,
**dadurch gekennzeichnet,**
**dass** die eine oder mehreren Säeinheiten (3-5) der Sämaschine (1) beim Wenden und/oder Rückwärtsfahren und/oder beim Transport des Trägerfahrzeugs (2) in eine Zwischenposition (35) anhebbar sind.

7. Selbstfahrendes Trägerfahrzeug mit diesem zugeordneter Einrichtung zum Ausbringen von rieselfähigem oder flüssigem Material für landwirtschaftliche Zwecke nach einem der vorhergehenden Ansprüche,
**dadurch gekennzeichnet,**
**dass** dem Trägerfahrzeug (2) ein Vorratsbehälter (25,26) zugeordnet ist und der Vorratsbehälter (25,26) von einem dem Trägerfahrzeug (2) zugeordneten Hubwerk (26) und/oder der Tragrahmenstruktur (14) des Trägerfahrzeugs (2) aufgenommen oder von dem Trägerfahrzeug (2) gezogen wird.

8. Selbstfahrendes Trägerfahrzeug mit diesem zugeordneter Sämaschine zum Ausbringen von rieselfähigem oder flüssigem Material für landwirtschaftliche Zwecke nach einem der vorgenannten Ansprüche,
**dadurch gekennzeichnet,**
**dass** in der Transportposition die Fahrerkabine (15') zumindest teilweise den Bereich des Transportbehälters (25, 25') in Arbeitsposition ausfüllt.

9. Selbstfahrendes Trägerfahrzeug mit diesem zugeordneter Sämaschine zum Ausbringen von rieselfähigem oder flüssigem Material für landwirtschaftliche Zwecke nach einem der vorhergehenden Ansprüche,
**dadurch gekennzeichnet,**
**dass** die den Fahrzeugachsen (11, 13) des Trägerfahrzeugs (2) zugeordneten Laufräder (10,12) lenkbar und in einer Hundegangfunktion betreibbar sind und wobei das Trägerfahrzeug (2) in der Arbeitsposition in der Hundegangfunktion betreibbar ist.

10. Selbstfahrendes Trägerfahrzeug mit diesem zugeord neter Sämaschine zum Ausbringen von rieselfähigem oder flüssigem Material für landwirtschaftliche Zwecke nach Anspruch 9,
**dadurch gekennzeichnet,**
**dass** dem Trägerfahrzeug (2) im rückwärtigen Bereich Bodenbearbeitungs- und/oder Saatbettbereitungseinheiten (39) zugeordnet sind und wobei die Arbeitsbereiche der dem Trägerfahrzeug (2) vorauslaufenden Säeinheiten (3,5) und der nachlaufenden Bodenbearbeitungs- und/oder Saatbettbereitungseinheiten (39) nahezu bündig aneinander grenzen.

11. Selbstfahrendes Trägerfahrzeug mit diesem zugeordneter Sämaschine zum Ausbringen von rieselfähigem oder flüssigem Material für landwirtschaftliche Zwecke nach einem der vorhergehenden Ansprüche,
**dadurch gekennzeichnet,**
**dass** das Trägerfahrzeug (2) in Arbeitsposition so betreibbar ist, dass jeweils die einer Fahrzeugseite zugeordneten Laufräder (10,12) in derselben Fahrspur laufen.

## Claims

1. A self-propelled carrier vehicle with a sowing machine associated therewith for distributing material which is fluid or pourable for agricultural purposes, wherein the sowing units of the sowing machine precede the carrier vehicle in the working position, the sowing machine (1) includes one or more sowing units (3-5) and wherein the sowing units (3-5) in the working position are oriented almost perpendicularly to the direction of travel (FR) of the carrier vehicle (2), **characterised in that** the sowing machine (1) has a balanced structure in the working position and in the transport position, wherein the balanced structure is implemented **in that** the carrier vehicle (2) has at least two vehicle axles (11, 13) and the one or more sowing units (3-5) in the working and transport positions are arranged substantially in the region of the one vehicle axle (11) and at least the drive members (21, 22) of the transport vehicle (2) and the storage container (25, 25') are arranged substantially in the region of the at least one further vehicle axle (13) on the carrier vehicle (2) and wherein associated with the carrier vehicle (2) is a pivotable driver cab (15, 15') which in the working position is positioned substantially in the region of the one vehicle axle (11) and in the transport position is positioned substantially in the region of the further vehicle axle (13) and in the transport position the one or more sowing units (3-5) at least partially fill the region of the driver cab (15) in the working position.

2. A self-propelled carrier vehicle with a sowing machine associated therewith for distributing material which is fluid or pourable for agricultural purposes according to claim 1 **characterised in that** the one or more sowing units (3-5) are moveable from a non-working position into a working position and vice-versa.

3. A self-propelled carrier vehicle with a sowing machine associated therewith for distributing material which is fluid or pourable for agricultural purposes according to claim 2 **characterised in that** the sowing machine (1) has a plurality of sowing units (3-5) and wherein the sowing units (3-5) are coupled together directly or by way of at least one support frame structure (7) at least in the working position.

4. A self-propelled carrier vehicle with a sowing machine associated therewith for distributing material which is fluid or pourable for agricultural purposes according to one of the preceding claims **characterised in that** the sowing machine (1) including a or a plurality of sowing units (3-5) is adapted to the carrier vehicle (2) by way of a support frame structure (7) and wherein the support frame structure (7) carries the sowing machine (1) in such a way that the sowing machine (1) is moved in pushing relationship by the support frame structure (7).

5. A self-propelled carrier vehicle with a sowing machine associated therewith for distributing material which is fluid or pourable for agricultural purposes according to one of claims 1 to 3 **characterised in that** the sowing machine (1) including a or a plurality of sowing units (3-5) is adapted to the carrier vehicle (2) by way of a support frame structure (7) and wherein the support frame structure (7) carries the sowing machine (1) in such a way that the sowing machine (1) is towed by the support frame structure (7).

6. A self-propelled carrier vehicle with a device associated therewith for distributing material which is fluid or pourable for agricultural purposes according to one of the preceding claims **characterised in that** the one or more sowing units (3-5) of the sowing machine (1) can be lifted into an intermediate position (35) upon turning and/or reversing and/or upon transport of the carrier vehicle (2).

7. A self-propelled carrier vehicle with a device associated therewith for distributing material which is fluid or pourable for agricultural purposes according to one of the preceding claims **characterised in that** a storage container (25, 26) is associated with the carrier vehicle (2) and the storage container (25, 26) is mounted by a lift mechanism (26) associated with the carrier vehicle (2) and/or the support frame structure (14) of the carrier vehicle (2) or is towed by the carrier vehicle (2).

8. A self-propelled carrier vehicle with a sowing machine associated therewith for distributing material which is fluid or pourable for agricultural purposes according to one of the preceding claims **characterised in that** in the transport position the driver cab (15') at least partially fills the region of the transport container (25, 25') in the working position.

9. A self-propelled carrier vehicle with a sowing machine associated therewith for distributing material which is fluid or pourable for agricultural purposes according to one of the preceding claims **characterised in that** the support wheels (10, 12) associated with the vehicle axles (11, 13) of the carrier vehicle (2) are steerable and are operable in a crab steering function and wherein the carrier vehicle (2) is operable in the working position in the crab steering function.

10. A self-propelled carrier vehicle with a sowing machine associated therewith for distributing material which is fluid or pourable for agricultural purposes according to claim 9 **characterised in that** ground cultivation and/or seed bed preparation units (39) are associated with the carrier vehicle (2) in the rearward region and wherein the working regions of the sowing units (3-5) leading the carrier vehicle (2) and the trailing ground cultivation and/or seed bed preparation units (39) are in almost flush mutually adjoining relationship.

11. A self-propelled carrier vehicle with a sowing machine associated therewith for distributing material which is fluid or pourable for agricultural purposes according to one of the preceding claims **characterised in that** the carrier vehicle (2) is so operable in the working position that the support wheels (10, 12) associated with a vehicle side respectively run in the same travel track.

## Revendications

1. Véhicule porteur automoteur avec semoir associé à celui-ci pour épandre une matière coulante ou liquide à des fins agricoles, les unités semeuses du semoir précédant le véhicule porteur dans la position de travail, le semoir (1) comprenant une ou plusieurs unités semeuses (3-5) et les unités semeuses (3-5) étant orientées à peu près perpendiculairement à la direction de marche (FR) du véhicule porteur (2) dans la position de travail, **caractérisé en ce que** le semoir (1) présente une structure équilibrée dans la position de travail et dans la position de transport, la structure équilibrée étant obtenue par le fait que le véhicule porteur (2) présente au moins deux essieux de véhicule (11, 13) et lesdites une ou plusieurs unités semeuses (3-5) sont disposées, dans la position de travail et de transport, sensiblement dans la zone d'un essieu de véhicule (11) et au moins les organes d'entraînement (21, 22) du véhicule porteur (2) et le réservoir de stockage (25, 25') sont disposés sensiblement dans la zone dudit au moins un autre essieu de véhicule (13) sur le véhicule porteur (2), une cabine de conduite basculante (15, 15') étant associée au véhicule porteur (2), laquelle est positionnée sensiblement dans la zone d'un essieu de véhicule (11) dans la position de travail et sensiblement dans la zone de l'autre essieu de véhicule (13) dans la position de transport, et, dans la position de transport, lesdites une ou plusieurs unités semeuses (3-5) occupent au moins en partie la zone de la cabine de conduite (15) en position de travail.

2. Véhicule porteur automoteur avec semoir associé à celui-ci pour épandre une matière coulante ou liquide à des fins agricoles selon la revendication 1, **caractérisé en ce que** lesdites une ou plusieurs unités semeuses (3-5) sont déplaçables d'une position de non-travail dans une position de travail et vice-versa.

3. Véhicule porteur automoteur avec semoir associé à celui-ci pour épandre une matière coulante ou liquide à des fins agricoles selon la revendication 2, **caractérisé en ce que** le semoir (1) comprend une pluralité d'unités semeuses (3-5), les unités semeuses (3-5) étant, au moins dans la position de travail, accouplées entre elles directement ou par l'intermédiaire d'au moins une structure de châssis porteur (7).

4. Véhicule porteur automoteur avec semoir associé à celui-ci pour épandre une matière coulante ou liquide à des fins agricoles selon l'une des revendications précédentes, **caractérisé en ce que** le semoir (1) comprenant lesdites une ou plusieurs unités semeuses (3-5) est adapté sur le véhicule porteur (2) par l'intermédiaire d'une structure de châssis porteur (7), la structure de châssis porteur (7) recevant le semoir (1) de façon que le semoir (1) soit déplacé en poussée par la structure de châssis porteur (7).

5. Véhicule porteur automoteur avec semoir associé à celui-ci pour épandre une matière coulante ou liquide à des fins agricoles selon l'une des revendications 1 à 3, **caractérisé en ce que** le semoir (1) comprenant lesdites une ou plusieurs unités semeuses (3-5) est adapté sur le véhicule porteur (2) par l'intermédiaire d'une structure de châssis porteur (7), la structure de châssis porteur (7) recevant le semoir (1) de façon que le semoir (1) soit tracté par la structure de châssis porteur (7).

6. Véhicule porteur automoteur avec semoir associé à celui-ci pour épandre une matière coulante ou liquide à des fins agricoles selon l'une des revendications précédentes, **caractérisé en ce que** lesdites une ou plusieurs unités semeuses (3-5) du semoir (1) peuvent être levées dans une position intermédiaire (35) lors du rebroussement et/ou de la marche arrière et/ou du transport du véhicule porteur (2).

7. Véhicule porteur automoteur avec semoir associé à celui-ci pour épandre une matière coulante ou liquide à des fins agricoles selon l'une des revendications précédentes, **caractérisé en ce qu'**un réservoir de stockage (25, 26) est associé au véhicule porteur (2), et le réservoir de stockage (25, 26) est reçu par un mécanisme de levage (26) associé au véhicule porteur (2) et/ou par la structure de châssis porteur (14) du véhicule porteur (2) ou tracté par le véhicule porteur (2).

8. Véhicule porteur automoteur avec semoir associé à celui-ci pour épandre une matière coulante ou liquide à des fins agricoles selon l'une des revendications précédentes, **caractérisé en ce que**, dans la position de transport, la cabine de conduite (15') occupe au moins en partie la zone du réservoir de transport (25, 25') en position de travail.

9. Véhicule porteur automoteur avec semoir associé à celui-ci pour épandre une matière coulante ou liquide à des fins agricoles selon l'une des revendications précédentes, **caractérisé en ce que** les roues porteuses (10, 12) associées aux essieux de véhicule (11, 13) du véhicule porteur (2) sont orientables et peuvent être utilisées dans une fonction de marche en crabe, le véhicule porteur (2) pouvant, dans la position de travail, être utilisé dans la fonction de marche en crabe.

10. Véhicule porteur automoteur avec semoir associé à celui-ci pour épandre une matière coulante ou liquide à des fins agricoles selon la revendication 9, **caractérisé en ce que** des unités de travail du sol et/ou de préparation du lit de semences (39) sont associées au véhicule porteur (2) dans la partie arrière, les zones de travail des unités semeuses (3-5) précédant le véhicule porteur (2) et des unités de travail du sol et/ou de préparation du lit de semences (39) remorquées se jouxtant de manière sensiblement contiguë.

11. Véhicule porteur automoteur avec semoir associé à celui-ci pour épandre une matière coulante ou liquide à des fins agricoles selon l'une des revendications précédentes, **caractérisé en ce que** le véhicule porteur (2) peut être utilisé, en position de travail, de façon que les roues porteuses (10, 12) associées à un côté du véhicule se déplacent dans la même trace de passage.
